# EUROPEAN PATENT APPLICATION

(11) **EP 2 818 806 A1**
(43) Date of publication of application: **31.12.2014**
(21) Application number: 13751823.9
(22) Date of filing: 22.02.2013
(51) Int. Cl.: F24J 2/38

(54) **SYSTEM FOR POSITIONING A REFLECTIVE SURFACE IN RELATION TO THE SUN, USING A SOLAR SENSOR AND THE REFLECTED LIGHT**

(30) Priority: 22.02.2012 ES 201200181
(71) Applicant: Universidad de Sevilla, E-41013 Sevilla (ES)
(72) Inventor: QUERO REBOUL, José Manuel, E-41092 Sevilla (ES); RODRÍGUEZ ALCÓN, Manuel, E-41092 Sevilla (ES)
(74) Representative: Pons Ariño, Angel
(86) International application number: PCT/ES2013/000047
(87) International publication number: WO 2013/124501

(57) **Abstract**

The invention relates to a method for positioning a reflective surface in relation to the sun, so that the reflected light falls on a target point, using a solar sensor and a two-axes angular mechanism. The method can be used to position a reflective surface (R) in relation to the sun (S), said reflective surface being mounted on a mechanical system having two axes of rotation (azimuth-elevation), using a solar sensor (1) that is positioned facing the reflective surface in a fixed orientation. The solar sensor measures the angles (2) formed by the projected incident light vectors in relation to two orthogonal planes (4). The method is applied independently and simultaneously to both axes of rotation and can be used to calculate the relative position of the ray (3) reflected from the reflective surface in relation to the orthogonal planes (4) of the solar sensor (1). Once the relative position is known, the position of the reflective surface (R) is altered in both independent axes, by means of a suitable movement of two motors, until the relative position (2) of the reflected ray (3) coincides with the perpendicular of the solar sensor (1).

## Description

### OBJECT OF THE INVENTION

The present invention relates to a system that allows positioning of a reflective surface, mounted on a mechanism having two rotation axes: azimuth-elevation, in relation to the sun by means of a solar sensor disposed in front of the reflective surface and in a fixed position. The system calculates the relative position of the reflected ray in relation to the orthogonal planes of the solar sensor as of the signals generated by said solar sensor. Said relative position is calculated separately for both rotation axes, which makes it possible to correct the position of the reflective surface subsequently by actuating the motors of each rotation axis until the relative position of the reflected rays coincides with the perpendicular direction of the solar sensor.

The invention is directly applicable in the field of positioning of elements in relation to light radiation, as in the case of heliostats, reflective elements and solar collectors in solar energy power generation systems. It is also useful for indirect lighting systems using reflected sunlight.

### STATE OF THE ART

Currently, positioning a reflective surface has become a pressing issue due to the fact that its use is essential in concentration solar power plants that use mirrors, called heliostats, which reflect sunlight onto a distant collector located even hundreds of metres away. The position where the reflected light must fall must be specified to within decimetre error. Therefore, the accuracy with which the mirror must be positioned in relation to the sun must be very high. The heliostats used at these plants use positioning systems based on a dual-axis angular mechanism, actuated by corresponding motors having a high reduction ratio. An angle encoder-type angle sensor determines the rotation angle per each axis in relation to an initial position. This initial position is known as of an initial position sensor. The position of the sun is also known as of a set of equations, called solar almanac, which must be evaluated with a periodicity of less than 20 seconds. Once the position of the concentrator, the sun and that relative to the heliostat and concentrator are known, the error committed and subsequent motor control action can be calculated.

Both the initial position and angle sensor must be highly accurate in order to fulfil the aforementioned aiming requirements. Likewise, the structure that supports the mirror and positioning system must be sufficiently robust to support the mirror and the shear stress exerted by the wind thereon, in addition to being highly adjusted to reduce wind tolerances. Another effect that must be taken into account is the deviation of the structure due to the settlement of its foundations. Lastly, calculating the position is computationally intensive, requiring the use of a high-performance microprocessor. Therefore, a system that simplifies the structure, sensors and calculation is required for the purpose of lowering heliostat manufacturing costs.

Spanish Patent Application number 200900206 proposes using two solar sensors to position a surface in relation to a light source. The assembly of said solar sensors establishes a handicap that complicates the installation and execution of said procedure, as misalignments therebetween give rise to positioning calculation errors. Also, any defect in the behaviour of the structure affects said positioning. The use of a single sensor proposed in this invention avoids these problems in the reflective surface positioning procedure with respect to that proposed using the method of two solar sensors.

The positioning procedure proposed herein makes it possible to close the control loop of a heliostat, feeding back the error committed directly as of the reflected light and lowering manufacturing costs, as the use of angle sensors and initial positioning are eliminated. Also, mechanical errors generated by the structure and external disturbances such as wind are also offset.

### DESCRIPTION OF THE DRAWINGS

Figure 1 shows a plan view of the position of the reflective surface (R), positioned so that it reflects sunlight (3) at an angle (2) onto the orthogonal planes (4) of the solar sensor (1) disposed in front of the surface and facing it.
Figure 2 shows a plan view of the final positioning of the reflective surface (R), so that the angle (2) formed by the reflected rays (3) in relation to the orthogonal planes (4) of the solar sensor (1) corresponds to the perpendicular direction of the solar sensor (1). The sensor has been previously positioned so that its perpendicular axis is incident upon the target surface (5).
Figure 3 shows the different designs that can be adopted by the reflective surface (R). It is of arbitrary size and has a square (6), rectangular (7), circular (8) or other polygonal shape (9). It is formed by a single flat or slightly curved mirror (12), faceted (formed by small reflective surfaces adjacent therebetween) (10) or not, or any combination of these designs. The sole condition is that the surface must be reflective to ensure the existence of a reflected ray.
Figure 4 shows a plan view of the procedure for positioning a reflective surface in relation to any light source using a sensor for determining the angle of incidence, disposed in front of said reflective surface.

This figure shows a light source of any nature that emits sufficient radiation (13), allowing the condition of the existence of a reflected ray (3) that falls upon the solar sensor (1).

Figure 5 shows a preferred embodiment of the invention.

This figure shows a heliostat formed by a glass mirror (14) and an azimuthal-zenithal motor mechanism (15, 16) on a mast (17). The solar sensor (18) is disposed on another mast (19), facing the reflected ray (20). A control system (21) receives the measurement from the sensor and decides how to move the motors to correct the position of the mirror so that the reflected ray is perpendicular to the solar sensor, in order to point said ray towards the target surface (22).

### DESCRIPTION OF THE INVENTION

The present invention discloses a system for positioning a reflective surface so that the light incident thereupon falls on a target point. Presumably, the reflective surface is disposed on a dual-axis angular mechanism: azimuth (horizontal to the ground) and elevation (perpendicular to the ground).

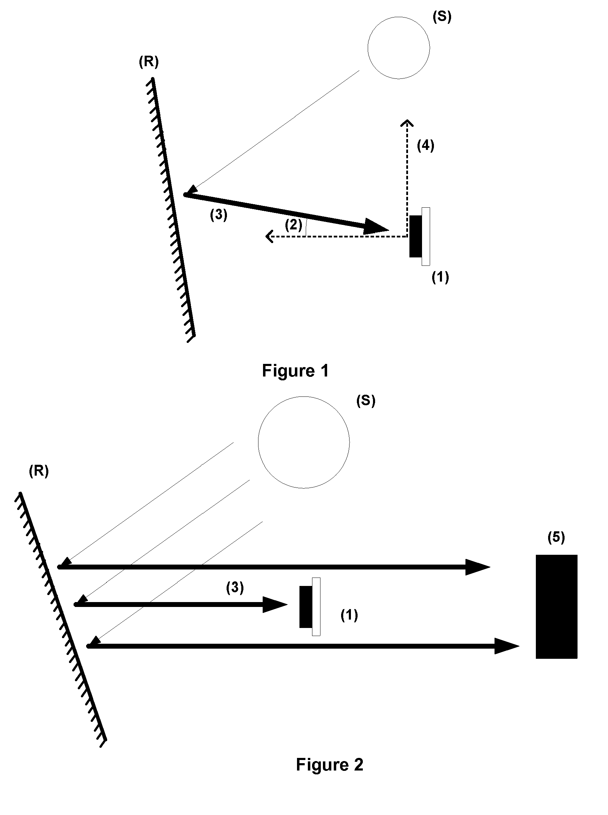

Figure 1 shows a plan view of the procedure which allows positioning of a reflective surface (R) mounted on a mechanical system with two rotation axes using a solar sensor (1) to be positioned in relation to the sun, so that the angles (2) formed between the reflected rays (3) and the orthogonal planes (4) of said sensor cause said reflected rays (3) to coincide with the perpendicular direction of the solar sensor (1).

When the angles do not coincide with the perpendicular direction of the solar sensor, it is sufficient to move the motors of the mechanical system and feed back the system, in a closed control loop, in order to measure said angles until reaching the perpendicular direction of the solar sensor. A target surface (5) can be illuminated using this method and said illumination can be maintained even if the sun moves, as the control loop changes the orientation of the mirror accordingly.

As shown in figure 2, in a plan view, wherein the proposed procedure makes it possible to point the reflected rays (3) towards the target surface (5), provided that the sensor has previously been positioned so that its perpendicular axis is incident upon the target surface (5).

Said positioning procedure is applied to both rotation axes independently.

In order to modify the targeted surface (5) it is sufficient to move the solar sensor (1), rotating it in place or moving it in accordance with the position of said target surface (5) in relation to the reflective surface (R), so that the dual-axis angular mechanism control repositions the reflective surface in accordance with the new direction of the perpendicular direction of the solar sensor (1).

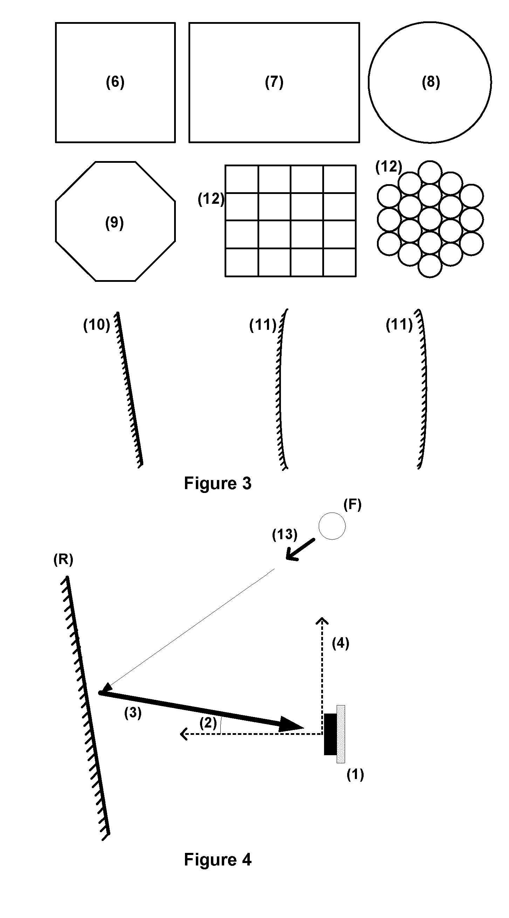

The reflective surface may be of any size, composition or curvature, as its reflective nature is what permits the utility of the present invention. It may be square (6), rectangular (7) or circular (8) in shape or have any other polygonal design (9), larger or smaller in size, faceted (formed of small reflective surfaces adjacent therebetween) (10) or not, flat (11) or with a certain curvature (concave or convex) (12) and any combination of these designs, as represented in the examples shown in figure 3. The sole condition is that the surface must be reflective (R) in order for there to be a reflected ray (3).

The angular mechanism of two axes will be formed by two motors on two orthogonal axes. Said motors may be of any type: electric motor, hydraulic actuator or pneumatic actuator, etc. The sole condition is that the dual-axis angular mechanism must allow the reflective surface to rotate on two orthogonal axes.

The light source represented in the invention is the sun (S) but it may be any other light source (F) that emits sufficient radiation (13) to allow the existence of a reflected ray (3) so that the solar sensor (1) can measure the angles (2): spotlights, lamps, light bulbs, solar simulators, etc. As represented in figure 4.

### PREFERRED EMBODIMENT OF THE INVENTION

The following example is provided in an illustrative and non-limiting manner.

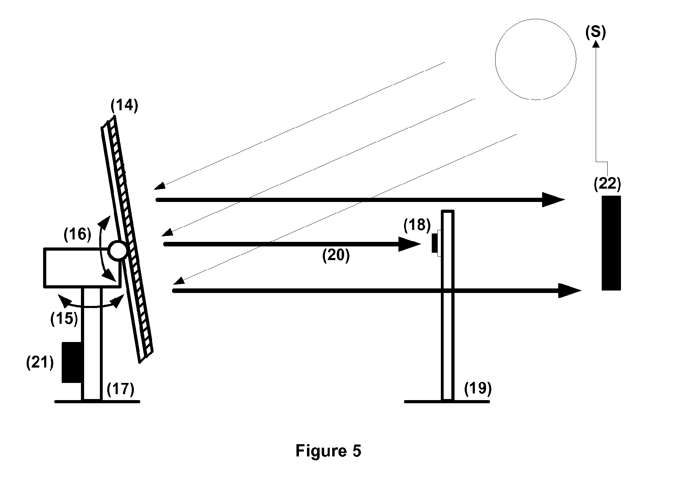

It is the use of a heliostat, formed by a 2 m² square, flat, glass mirror (14), which can be positioned according to a dual-axis angular mechanism: azimuthal (parallel to the ground) (15) and zenithal (perpendicular to the ground) (16); a motor for each rotation axis. In turn, said mechanism is fixed to the ground by means of a mast (17), as represented in figure 5.

Further, a solar sensor (18) is disposed screwed to a mast (19) that keeps it fixed in place and disposed in the direction of the reflected ray (20), also described in figure 5.

The solar sensor measures the angles formed by the reflected ray in relation to its orthogonal planes and said measurement is analysed by means of a control system (21) installed next to the motor mechanism.

The control mechanism will move the motors of the angular mechanism (15, 16) in accordance with the angle measurement of the solar sensor (18), in order to make the reflected ray (20) coincide with the perpendicular direction of the solar sensor. When said objective is achieved, the reflected ray will be pointed to the target point and/or surface (22).

## Claims

1. A system for positioning a reflective surface in relation to the sun using a solar sensor in the reflected light, **characterised in that** it is composed by a dual-axis angular mechanism and a sensor for measuring the angle of incidence of the light, which allows positioning of a reflective surface in relation to the incident sunlight so that the light reflected by said reflective surface falls upon a target point and/or surface.

2. A system, according to claim 1, **characterised in that** it uses a sensor that measures the angle of incidence of the light in relation to its orthogonal planes, the sensor being in a fixed position independent of the reflective surface and of the dual-axis motor mechanism.

3. A system, according to claims 1 and 2, **characterised in that** it uses a control system that obtains the actuation signal in accordance with the position error calculated, obtained, in turn, as of the difference between the angles measured by the sensor and the perpendicular direction thereto.

4. A system, according to claims 1 and 2, **characterised in that** it uses a control system that obtains the actuation signal in accordance with the position error calculated, obtained, in turn, as of the difference between the two angles measured by the sensor and two reference angles (one for each orthogonal plane of the solar sensor) that don't correspond to the perpendicular direction of the solar sensor.

5. A system, according to the previous claims, **characterised in that** on moving, rotating or transferring the solar sensor, the desired direction of the reflected rays is modified, thereby making it possible to point to the target surface.

6. A system, according to the preceding claims, **characterised in that** the reflective surface may be faceted or be a single flat or curved surface.

7. A system, according to the preceding claims, **characterised in that** the reflective surface may be of arbitrary size.

8. A system, according to the preceding claims, **characterised in that** the rotation of the surface mounted on the angular mechanism is carried out by means of electric motors, hydraulic or pneumatic actuators.

9. A system, according to the preceding claims, **characterised in that** it may work according to two orthogonal axes according to other, different azimuthal and elevation directions.

10. A system, according to the preceding claims, **characterised in that** it allows the positioning of a surface in relation to a light source other than the sun.
